# EUROPÄISCHE PATENTANMELDUNG

(11) **EP 1 690 665 A1**
(43) Veröffentlichungstag der Anmeldung: **16.08.2006**
(21) Anmeldenummer: 06002677.0
(22) Anmeldetag: 09.02.2006
(51) Int. Cl.: B29C 45/16, B29C 45/33, B29L 31/26

(54) **Verfahren und Spritzgiesswerkzeug zum Herstellen einer Kunststoffleiste**

(30) Priorität: 14.02.2005 DE 102005006663
(71) Anmelder: Moritz-Production Innovation in Kunststoff GmbH, 96476 Bad Rodach (DE)
(72) Erfinder: Schwemmlein, Helmut, 96328 Küps (DE); Welscher, Klaus, 96257 Redwitz (DE); Wagner, Peter, 96476 Bad Rodach (DE)
(74) Vertreter: Wunderlich, Rainer

(57) **Zusammenfassung**

Die Erfindung betrifft ein Verfahren und ein Werkzeug zum Herstellen einer Kunststoffleiste, welche eine Grundleiste aus einer ersten Komponente und mindestens eine Randleiste aus einer anderen Komponente aufweist. Zunächst wird die Grundleiste in einem Spritzgießwerkzeug spritzgegossen, dessen Formhohlraum von mindestens zwei gegenüberliegenden Grundformteilen zum Formen der Breitseiten der Grundleiste und mindestens einem Grundform-Wechselteil zum Formen einer Schmalseite der Grundleiste gebildet ist. Nach dem Spritzgießen der Grundleiste aus der ersten Komponente wird das mindestens eine Grundform-Wechselteil durch ein Randform-Wechselteil zum Formen der Randleiste ersetzt, während die Grundleiste zwischen den Grundformteilen verbleibt. Die mindestens eine Randleiste wird aus der anderen Komponente spritzgegossen.

## Beschreibung

Die Erfindung betrifft ein Verfahren zum Herstellen einer Kunststoffleiste gemäß dem Oberbegriff des Anspruchs 1. Des Weiteren betrifft die Erfindung ein Spritzgießwerkzeug zum Herstellen dieser Kunststoffleiste gemäß dem Oberbegriff des Anspruchs 10.

Leisten mit Dichtlippen werden vielfältig benötigt, zum Beispiel beim Fensterbau. Es ist bekannt, derartige Leisten aus einem Grundprofil zu fertigen, in das eine Gummilippe nachträglich eingeschoben oder angeklebt wird.

Spritzgussmaschinen bestehen aus einer Spritz- und einer Schließeinheit. Die Schließeinheit trägt das geteilte Spritzguss-Werkzeug, führt die Schließ- und Öffnungsbewegungen aus und hält während der Formfüllung und der Abkühlung des Teils das Werkzeug zu. Das Spritzgusswerkzeug dient zum Ausformen des plastifizierten und homogenisierten Werkstoffs in ein Endprodukt und besteht aus metallischen Werkstoffen, meistens Stahl. Es enthält Eingusskanäle, Formhohlräume mit Einsätzen, Kanäle zur Temperierung des Formteils, Pressluftkanäle oder Auswerfer zum Entformen der Formteile und Kanäle zum Entweichen der Luft beim Einschuss des heißen Spritzgussmaterials.

Zum Spritzgießen von Kunststoffteilen aus mehreren Komponenten werden zum Vergrößern der Formhohlräume austauschbare Einsatzteile oder Schieber verwendet. Bei Einsatzteilen können komplizierte Formen der zu erstellenden Teile verwirklicht werden, nur muss zum Austausch das Spritzgießwerkzeug geöffnet werden. Schieber können von außerhalb des Spritzgießwerkzeuges verfahren werden, mit ihnen können aber nur nach dem Stand der Technik Flächenauflagen oder einfache Flächenergänzungen des zu erstellenden Teils verwirklicht werden.

Aus der DE 42 24 171 A1 ist ein Spritzgießwerkzeug für zweifarbige Griffschalen bekannt, bei dem zwei Einspritzkanäle mit jeweils einer angeschlossenen Materialzuführungseinheit so angeordnet sind, dass eingeschobene Schieber beim Einspritzen der ersten Kunststoffkomponente den Formhohlraum begrenzen und gleichzeitig den zweiten Einspritzkanal blockieren. Um die zweite Kunststoffkomponente einzuspritzen, verbleibt das ausgehärtete Kunststoffteil aus der ersten Komponente im geschlossenen Werkzeug und die Schieber werden zurückgezogen, wodurch ein angrenzender Hohlraum erzeugt wird und der zweite Einspritzkanal freigegeben wird.

Die DE 34 46 020 A1 offenbart ein Verfahren zur Herstellung von Stoßfängern. Hierzu sind Spritzgießwerkzeuge vorgesehen, in denen nach dem Einspritzen der ersten Kunststoff-Komponente ein Wandbereich verschoben wird, wobei ein flächig überdeckender, vergrößerter Formhohlraum entsteht, indem das zweite Material der anderen Komponente eingegossen wird und die Verbindung der formgleichen Kunststoffteile durch Anschmelzen des ersten Materials an der Grenzfläche entsteht. Da bei Kunststoffteilen mit geschwungener Form das zweite, aus einer anderen Kunststoffkomponente bestehende Teil vergrößerte oder verkleinerte Radien aufweist, besteht der verschobene Wandbereich hier aus mehreren Formschiebern, die in unterschiedliche Richtungen verschoben werden müssen.

Der Erfindung liegt die **Aufgabe** zugrunde, ein Verfahren und ein Werkzeug anzugeben, mit welchen eine Kunststoffleiste mit einer Grundleiste und einer Randleiste effizient gefertigt werden können.

Die Aufgabe wird erfindungsgemäß durch ein Verfahren mit den Merkmalen des Anspruchs 1, durch eine Kunststoffleiste mit den Merkmalen des Anspruchs 8 und durch ein Spritzgießwerkzeug mit den Merkmalen des Anspruchs 10 gelöst. Bevorzugte Ausführungsformen sind in den abhängigen Ansprüchen angegeben.

Das erfindungsgemäße Verfahren dient zum Herstellen der Leiste, die aus einer Grundleiste aus einer ersten Kunststoffkomponente und aus mindestens einer Randleiste aus einer anderen Kunststoffkomponente besteht.

Das erfindungsgemäße Verfahren ist dadurch gekennzeichnet, dass zunächst die Grundleiste in einem Werkzeug aus einer Kunststoffkomponente spritzgegossen wird. Der Formhohlraum des Spritzgießwerkzeuges ist von zumindest zwei feststehenden, gegenüberliegenden Grundformteilen und einem oder mehreren verschiebbaren Grundform-Wechselteilen gebildet. Nach dem Spritzgießen der Grundleiste wird das Grundform-Wechselteil durch ein Randform-Wechselteil ersetzt, um die Randleiste aus einer weiteren Kunststoffkomponente im Spritzgießwerkzeug herzustellen. Dabei verbleibt die Grundleiste zwischen den Grundformteilen. Die Grundformteile verlaufen entlang der Breitseite über die gesamte Länge der länglichen Leiste. Dies gewährt eine sichere Formgebung selbst bei kleinen Leistenquerschnitten von unter 1 cm² und großen geschwungenen Formen. Mit den Wechselformteilen werden die Schmalseiten gebildet. Insbesondere Leisten mit Dichtlippen können so effizient und formgenau hergestellt werden.

Eine bevorzugte Variante des erfindungsgemäßen Verfahrens zum Herstellen einer Kunststoffleiste besteht darin, dass an die Grundleiste an ihren beiden Schmalseiten je eine Randleiste angegossen wird. Dadurch kann eine im Querschnitt etwa rechteckige Leiste mit zwei gegenüberliegenden Dichtlippen gefertigt werden.

Erfindungsgemäß ist es bevorzugt, dass die Grundleiste aus einer Hartkomponente und die mindestens eine Randleiste aus einer Weichkomponente gegossen wird. Die Randleiste kann so als elastische Dichtungslippe verwendet werden.

Als Hartkomponente werden hier Thermoplaste bezeichnet, die durch Zugabe von Härtern und/oder durch Vermischen mit anderen Kunststoffen zusätzliche Eigenschaften wie Festigkeit, Schlagfestigkeit und Oberflächenhärte aufweisen. Dies ist zum Beispiel PC-ABS. Als Weichkomponenten werden hier Thermoplaste bezeichnet, die Weichmacher enthalten und/oder mit Elastomeren, insbesondere mit Kautschuk, vermischt sind, um eine Flexibilität als Eigenschaft zu erhalten. Diese Stoffe werden auch als thermoplastische Elastomere bezeichnet. Als Spritzgussmasse werden vorzugsweise Thermoplaste, wie Polystyrol (PS), Butadien-Styrol (SB), Acrylnitril-Styrol (SAN), Acrylnitril-Butadien-Styrol (ABS), Polyäthylen (PE), Polypropylen (PP), Polyamid (PA), Polyacetal (POM), Polycarbonat (PC), Polyurethan (PU), Polyvinylchlorid (PVC), Polymethylmethacrylat (PMMA), Celluloseacetat (CA), Cellulosepropionat (CP), Celluloseacetobutyrat (CAB) und Polytrifluormonochloräthylen (CTFE) benutzt, deren Härte in dieser Reihenfolge zunimmt. Polyäthylen und Polyvinylchlorid können in der weichen sowie harten Ausführung spritzgegossen werden. Diese Kunststoffe können auch zur Einstellung bestimmter Eigenschaften miteinander bzw. mit Elastomeren vermischt und dann spritzgegossen werden.

Bei einer besonders vorteilhaften Weiterbildung der Variante des erfindungsgemäßen Verfahrens ist die Kunststoffleiste mit einer geschwungenen Form gebildet. Diese Leisten konnten bisher nur schwer gefertigt werden, wobei die Grundleiste aus Metall bestand. Die Erfindung erlaubt eine einfache Herstellung selbst komplexer Freiformleisten.

Bei einem bevorzugten erfindungsgemäßen Verfahren wird nach dem Spritzgießen der Grundleiste zuerst das Grundform-Wechselteil von einer Formposition zu einer Ruheposition bewegt. Dann kann das Randform-Wechselteil von seiner Ruheposition in eine Formposition zum Formen der Randleiste an die Grundleiste bewegt werden. Eine Blockierung des Randform-Wechselteils durch das Grundform-Wechselteil ist durch ihre Verschiebung in die Ruheposition aufgehoben.

Dabei ist es besonders vorteilhaft, wenn die Bewegung des Grundform-Wechselteils etwa senkrecht zur Bewegung des Randform-Wechselteils erfolgt. Dadurch wird der Raum im Werkzeug hervorragend ausgenutzt.

Bei diesem erfindungsgemäßen Verfahren zur Herstellung einer Kunststoffleiste ist es vorteilhaft, wenn das Grundform-Wechselteil und das Randform-Wechselteil mittels Keilschiebermechanismus entlang von Führungsbahnen verschoben werden kann. Dieser Keilschiebermechanismus wird angewandt, um die waagrechte Bewegung der außen an der Werkzeughälfte befindlichen Zylinder der Kernzüge in eine senkrechte Bewegung der Wechselteile mechanisch zuverlässig umzuleiten.

Die erfindungsgemäße Kunststoffleiste besteht erfindungsgemäß aus einer Grundleiste aus einer ersten Komponente und mindestens einer Randleiste aus einer zweiten Komponente.

Die Grundleiste der Kunststoffleiste sorgt für Stabilität und die Randleiste kann als eine Dichtlippe aus einem elastischen Material gebildet sein.

Die erfindungsgemäße Kunststoffleiste ist dadurch gekennzeichnet, dass die Randleiste an die Grundleiste angegossen ist. Dadurch muss nicht, wie schon erwähnt, in einem nachfolgenden Arbeitsschritt die Randleiste an die Grundleiste durch Kleben oder Formschluss angefügt werden. Dies vereinfacht die Herstellung ganz erheblich. Die Leiste kann etwa als Fenster- oder Dachleiste bei Fahrzeugen zum Einsatz kommen.

Bei einer bevorzugten Variante der erfindungsgemäße Kunststoffleiste wird die Randleiste aus einem Weichkunststoff hergestellt und als eine Dichtungslippe ausgebildet. Hauptsächlich werden Duro- und Thermoplaste spritzgegossen.

Das erfindungsgemäße Spritzgießwerkzeug ist dadurch gekennzeichnet, dass ein Formhohlraum der Grundleiste von zwei oder mehreren gegenüberliegenden Grundformteilen zum Formen der Breitseite der Grundleiste und mindestens einem Grundform-Wechselteil zum Formen einer Schmalseite der Grundleiste gebildet ist. Außerdem ist das Grundform-Wechselteil durch ein Randform-Wechselteil auswechselbar, so dass die Randleiste an die Grundleiste angießbar ist.

Das erfindungsgemäße Spritzgießwerkzeug wird zum Herstellen dieser erfindungsgemäßen Kunststoffleiste und insbesondere zur Durchführung des erfindungsgemäßen Verfahrens eingesetzt.

Eine besonders bevorzugte Variante des erfindungsgemäßen Spritzgießwerkzeuges ist, dass es aus zwei Werkzeughälften besteht, wobei eine erste abhebbare Werkzeughälfte ein feststehendes Grundformteil und die Einspritzöffnung für die Kunststoffkomponenten aufweist und die zweite Werkzeughälfte das gegenüberliegende, feststehende Grundformteil mit den verschiebbaren Grundform-Wechselteilen und den verschiebbaren Randform-Wechselteilen aufweist. An den Seiten außen an der Werkzeughälfte befinden sich ansteuerbare Zylinder der Kernzüge zum direkten oder über Keilmechanismus indirekten Verschieben der Wechselteile, die an Schiebern, Keilen oder Zwischenstücken auswechselbar befestigt sind. Außerdem besteht bei einer bevorzugten Variante das erfindungsgemäße Spritzgießwerkzeug aus zwei Formhohlräumen, die symmetrisch bezüglich der Längsachse des Spritzgießwerkzeuges ausgebildet sind, um gleich zwei Kunststoffleisten in einem Arbeitsprozess herstellen zu können.

Die Erfindung wird nachfolgend anhand eines bevorzugten Ausführungsbeispieles weiter erläutert, welches in den Zeichnungen in verschiedenen Ansichten schematisch dargestellt ist. In den folgenden Zeichnungen wird gezeigt:
- Fig. 1: zeigt eine geschnittene Seitenansicht des Spritzgießwerkzeuges in Auswerferposition.
- Fig. 2: zeigt eine Draufsicht auf die zweite Werkzeughälfte.
- Fig. 3: zeigt eine geschnittene Seitenansicht D-D des Spritzgießwerkzeuges mit den Kernzügen in Position für den Spritzprozess der Grundleiste aus der Hartkomponente.
- Fig. 4: zeigt eine geschnittene Seitenansicht C-C des Spritzgießwerkzeuges mit den Kernzügen in Position für den Spritzprozess der Randleisten aus der Weichkomponente.

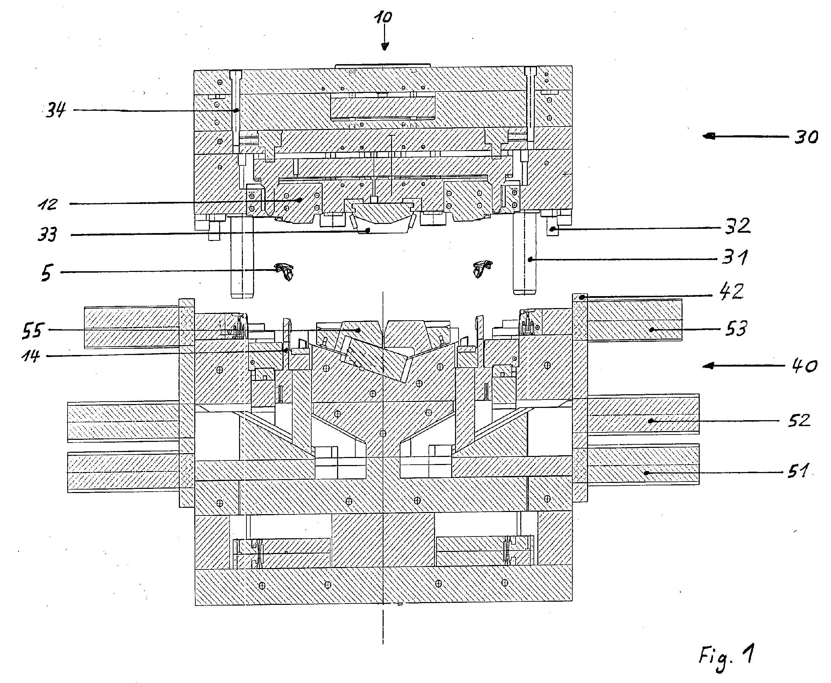

Fig. 1 zeigt eine geschnittene Seitenansicht eines offenen Spritzgießwerkzeuges 10, welches zwei Werkzeughälften 30, 40 aufweist, die ineinandergreifen.

Die zwei Werkzeughälften 30, 40 sind durch Führungsbolzen 31, 32 und durch entsprechende Führungslöcher 41, 43 und seitliche Führungsleisten 42 zueinander schiebbar. An den Seiten der zweiten Werkzeughälfte 40, teilweise in verschiedener Höhe und teilweise schräg zur Außenfläche verlaufend, sowie an der Oberseite der ersten Werkzeughälfte sind Kernzüge 51, 52, 53, 54, 55 angeordnet, deren verfahrbare Zylinder auch bei geschlossenen Werkzeughälften 30, 40 an den Seiten der Werkzeughälfte 40 herausragen. Die Kolben dieser Zylinder sind hydraulich verstellbar und steuerbar, und deren Stirnflächen sind teilweise mit Keilen verbunden, deren Anordnung und Funktion nachfolgend noch näher beschrieben werden. Jeder der beiden Werkzeughälften 30, 40 besteht aus mehreren Lagen, die auseinandernehmbar sind, so dass mit einem Greifer die Kaltkanalgrate entfernt werden können. In der ersten Werkzeughälfte 30 befinden sich Eingusskanäle 34, die von außen her mit Nadeln des Düsenkopfes verschließbar sind, um ein Verstopfen durch Verdrängen des eingegossenen Kunststoffes zu verhindern und um die Zuführmenge des plastifizierten Kunststoffes steuern zu können. Jeweils an den Längsseitenhälften können symmetrisch zur Längsachse der Gussform zwei Kunststoffleisten 5 mit zwei Randleisten 7, 8 aus der Weichkomponente und in der Mitte zwischen den Randleisten mit einer Grundleiste 6 aus der Hartkomponente gegossen werden.

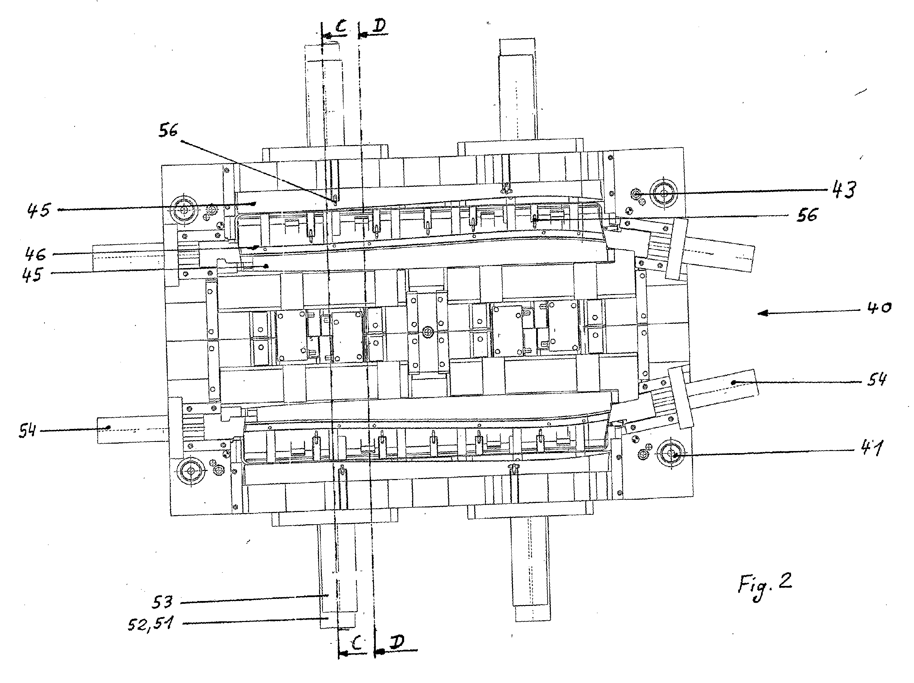

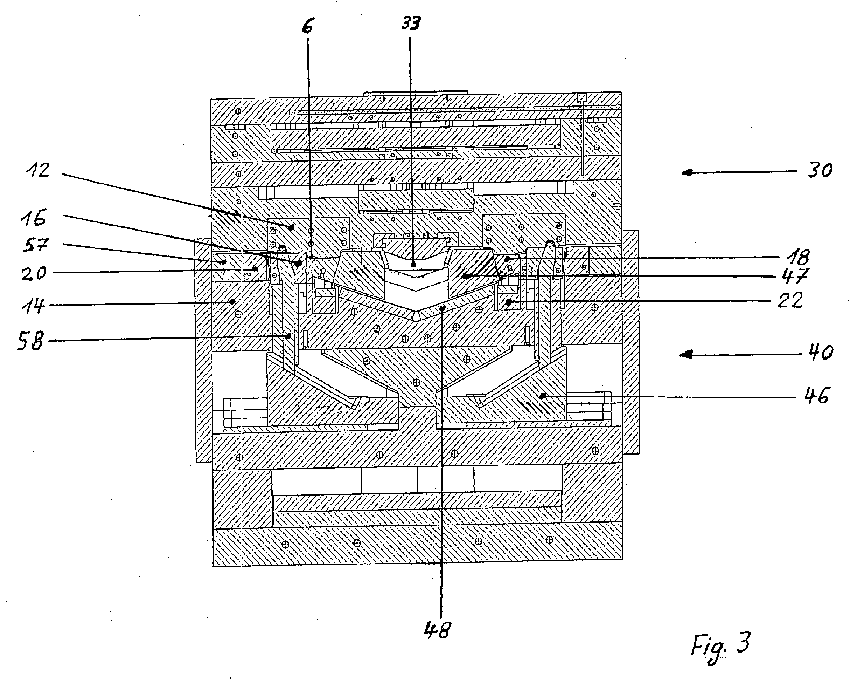

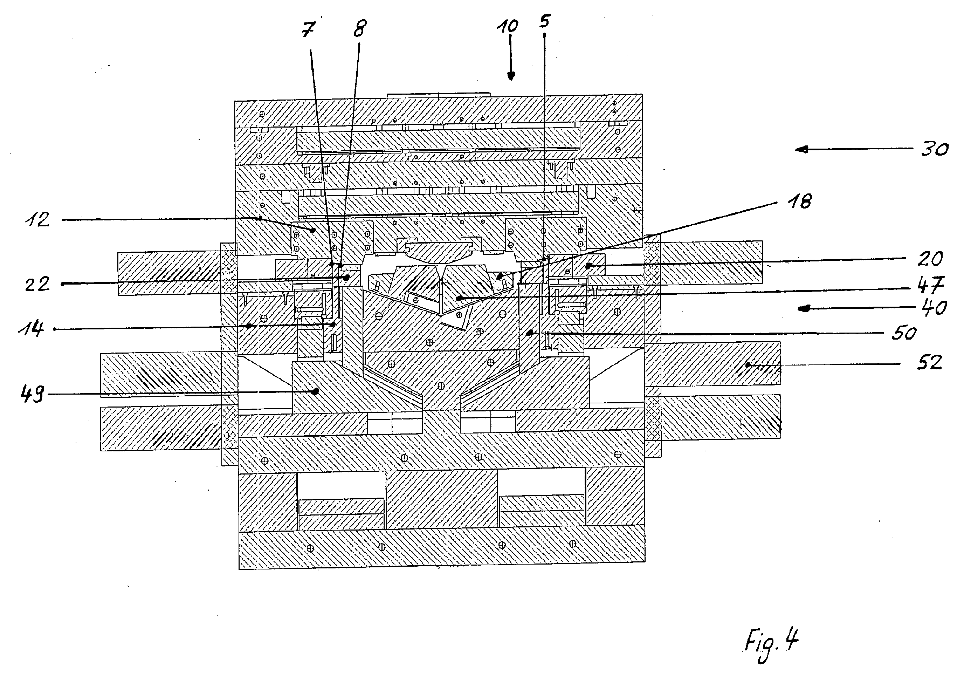

Fig. 2 zeigt eine Draufsicht auf die zweite Werkzeughälfte 40, aus der herausragende ansteuerbare Zylinder der Kernzüge 51, 52, 53, 54 angeordnet sind, und in der zwei Formhohlräume symmetrisch bezüglich der Längsachse liegen, die für das Spritzgießen der Weichkomponente und für das Spritzgießen der Hartkomponente vorgesehen sind. Die Formhohlräume bestehen jeweils aus dem einen Formhohlraum für die Hartkomponente 46 und den beiden seitlich angeordneten Formhohlräumen für die Weichkomponente 45. Außerdem hat die zweite Werkzeughälfte 40 Führungslöcher 41, 43 zum Einführen der Führungsbolzen 31, 32 der ersten Werkzeughälfte 30 und nebeneinander liegende Auswerferlöcher 56, die je Komponentenformhohlraum versetzt angeordnet sind. Aus dieser Fig. 2 ist die Lage der Schnittdarstellungen der Fig. 3 und Fig. 4 entnehmbar.

Fig. 3 und 4 zeigen jeweils eine geschnittene Seitenansicht des spiegelsymmetrisch aufgebauten Spritzgießwerkzeuges für den Spritzprozess von zwei Mehrkomponentenleisten auf. Die Sperrschiebertechnik mit den sich verändernden Positionen der als Konturschieber dienenden Form-Wechselteile 16, 18, 20, 22 beim Spritzprozess werden nachfolgend beschrieben. Auf den Konturschiebern befinden sich auch Angusskanäle. Um auch Teile mit anderer Form mit diesem Werkzeug spritzgießen zu können, sind die schmalen Form-Wechselteile 16, 18, 20, 22 mit Form-Wechselteilen austauschbar, die anders geformte Kavitäten aufweisen. Dieses Austauschen wird ermöglicht durch Verschraubungen des äußeren Randformwechselteils 20 mit dem Zwischenstück 57, des inneren Grundformwechselteils 18 mit dem Keil 47, des äußeren Grundform-wechselteils mit dem Schieber 58 und des inneren Randform-wechselteils 22 mit dem Schieber 50.

Als erster Arbeitsgang wird die Grundleiste 6 aus der Hartkomponente gespritzt. Der Hohlraum für die Grundleiste 6 wird durch die Fläche des oberen Grundformteils 12 und des unteren Grundformteils 14 sowie durch die Fläche des äußeren Grundform-Wechselteils 16 und des inneren Grundform-wechselteils 18 begrenzt. Nachdem die gespritzten Grundleisten 6 aus der Hartkomponente hinreichend formstabil abgekühlt sind, werden einerseits von außen her mit den Zylindern die Keile 46 der Kernzüge 51 hinausgefahren, so dass die Schieber 58 und damit auch die äußeren Grundform-Wechselteile 16 auf der schiefen Ebene des Keils 46 des Kernzugs 51 nach unten in die Ruhepositionen weggleiten. Dann werden die äußeren Randform-Wechselteile 20 mit Zylindern der Kernzüge 53 nach innen in die, von den äußeren Grundform-Wechselteilen 16 freigegebenen Räume in Formpositionen geschoben. Andererseits werden von innen her die oberen Blockierungen 33 durch das Herausfahren der Zylinder der Kernzüge 54 entfernt, so dass die Keile 47 der Kernzüge 55 und mit ihnen die inneren Grundform-Wechselteile 18 auf den schiefen Ebenen 48 nach unten in die Mitte des Gießwerkzeuges in die Ruhepositionen gleiten. Dann werden die Zylinder der Kernzüge 52 in die Gussform eingefahren, so dass auf den schiefen Ebenen der Keile 49 dieser Kernzüge 52 die inneren Randform-Wechselteile 22 mittels des Schiebers 50 nach oben in die von den Kernzügen freigegebenen Räume in Formpositionen gleiten können. In die Aussparungen der inneren Randform-Wechselteile 22 und der äußeren Randform-Wechselteile 20 wird die Weichkomponente zum Bilden der Randleisten gegossen.

Anschließend wird die erste Werkzeughälfte nach oben abgehoben, so dass die zweite Werkzeughälfte freigefahren wird und die fertigen Kunststoffleisten 5 werden ausgeworfen.

Dafür sind mehrere, nebeneinander angeordnete, aber von Kunststoffkomponente zu Kunststoffkomponente versetzte Auswerferstangen senkrecht in der zweiten Werkzeughälfe um einen Hub von vorzugsweise 12 mm verfahrbar.

Die in diesem Ausführungsbeispiel gegossenen Kunststoffleiste sind bis zu 2000 mm lang und ca. 60 mm breit und seitlich von den Grundleisten aus der Hartkomponente befinden sich je zwei Randleisten aus der Weichkomponente, die als Dichtungslippen dienen.

## Patentansprüche

1. Verfahren zum Herstellen einer Kunststoffleiste, welche eine Grundleiste (6) aus einer ersten Komponente und mindestens eine Randleiste (7, 8) aus einer anderen Komponente aufweist,
**dadurch gekennzeichnet,**
**dass** zunächst die Grundleiste (6) in einem Spritzgießwerkzeug (10) spritzgegossen wird, dessen Formhohlraum von mindestens zwei gegenüberliegenden Grundformteilen (12, 14) zum Formen der Breitseiten der Grundleiste (6) und mindestens einem Grundform-Wechselteil (16, 18) zum Formen einer Schmalseite der Grundleiste (6) gebildet ist,
**dass** nach dem Spritzgießen der Grundleiste (6) aus der ersten Komponente das mindestens eine Grundform-Wechselteil (16, 18) durch ein Randform-Wechselteil (20, 22) zum Formen der Randleiste (7, 8) ersetzt wird, während die Grundleiste (6) zwischen den Grundformteilen (12, 14) verbleibt, und
**dass** die mindestens eine Randleiste (7, 8) aus der anderen Komponente spritzgegossen wird.

2. Verfahren zum Herstellen einer Kunststoffleiste nach Anspruch 1,
**dadurch gekennzeichnet,**
**dass** an die Grundleiste (6) an ihren zwei Schmalseiten je eine Randleiste (7, 8) angegossen wird.

3. Verfahren zum Herstellen einer Kunststoffleiste nach Anspruch 1 oder 2,
**dadurch gekennzeichnet,**
**dass** die Grundleiste (6) aus einer Hartkomponente und die mindestens eine Randleiste (7, 8) aus einer Weichkomponente gegossen wird.

4. Verfahren zum Herstellen einer Kunststoffleiste nach einem der Ansprüche 1 bis 3,
**dadurch gekennzeichnet,**
**dass** die Kunststoffleiste mit einer geschwungenen Form gebildet wird.

5. Verfahren zum Herstellen einer Kunststoffleiste,
**dadurch gekennzeichnet,**
**dass** nach dem Spritzgießen der Grundleiste (6) das mindestens eine Grundform-Wechselteil (16, 18) von einer Formposition zu einer vom Formhohlraum beabstandeten Ruheposition bewegt wird und
**dass** das mindestens eine Randform-Wechselteil (20, 22) von seiner Ruheposition in eine Formposition zum Formen der Randleiste (7, 8) an die Grundleiste (6) bewegt wird.

6. Verfahren zum Herstellen einer Kunststoffleiste nach Anspruch 5,
**dadurch gekennzeichnet,**
**dass** die Bewegung des Grundform-Wechselteils (16, 18) etwa senkrecht zur Bewegung des Randform-Wechselteils (20, 22) erfolgt.

7. Verfahren zum Herstellen einer Kunststoffleiste nach einem der Ansprüche 1 bis 6,
**dadurch gekennzeichnet,**
**dass** das Grundform-Wechselteil (16, 18) und das mindestens eine Randform-Wechselteil (20, 22) mittels Keilschiebermechanismus entlang von Führungsbahnen verschoben werden.

8. Kunststoffleiste mit einer Grundleiste (6) aus einer ersten Komponente und mindestens einer Randleiste (7, 8) aus einer zweiten Komponente,
**dadurch gekennzeichnet,**
**dass** die Randleiste (7, 8) an die Grundleiste (6) angegossen ist, insbesondere nach einem Verfahren nach einem der Ansprüche 1 bis 7.

9. Kunststoffleiste nach Anspruch 8,
**dadurch gekennzeichnet,**
**dass** die Randleiste (7, 8) aus einem Weichkunststoff als eine Dichtungslippe ausgebildet ist.

10. Spritzgießwerkzeug zum Herstellen einer Kunststoffleiste (5), welche eine Grundleiste (6) aus einer ersten Komponente und mindestens eine Randleiste (7, 8) aus einer anderen Komponente aufweist, insbesondere zur Durchführung des Verfahrens nach einem der Ansprüche 1 bis 7,
**dadurch gekennzeichnet,**
**dass** ein Formhohlraum zum Formen der Grundleiste (6) von zumindest zwei gegenüberliegenden Grundformteilen (12, 14) zum Formen der Breitseiten der Grundleiste (6) und mindestens einem Grundform-Wechselteil (16, 18) zum Formen einer Schmalseite der Grundleiste (6) gebildet ist und
**dass** das Grundform-Wechselteil (16, 18) durch ein Randform-Wechselteil (20, 22) auswechselbar ist, so dass die Randleiste (7, 8) an die Grundleiste (6) angießbar ist.

11. Spritzgießwerkzeug nach Anspruch 10,
**dadurch gekennzeichnet,**
**dass** das Spritzgießwerkzeug (10) zwei Werkzeughälften (30, 40) aufweist,
**dass** auf einer ersten Werkzeughälfte (30) ein Grundformteil (12) und Einspritzöffnungen für die Kunststoffkomponenten vorgesehen sind und
**dass** auf der zweiten Werkzeughälfte (40) das gegenüberliegende Grundformteil (14) mit dem Grundform-Wechselteil (14, 16) und dem Randform-Wechselteil (20, 22) angeordnet ist.

12. Spritzgießwerkzeug nach Anspruch 10 oder 11,
**dadurch gekennzeichnet,**
**dass** das Spritzgießwerkzeug (10) symmetrisch mit zwei Formhohlräumen ausgebildet ist.
